# EUROPÄISCHE PATENTSCHRIFT

(11) **EP 0 439 689 B1**
(45) Veröffentlichungstag und Bekanntmachung des Hinweises auf die Patenterteilung: **21.12.1994**
(21) Anmeldenummer: 90120691.2
(22) Anmeldetag: 29.10.1990
(51) Int. Cl.: B01F 7/16, B01F 15/00

(54) **Mischgranulator**
Mixgranulator
Mélangeur granulateur

(30) Priorität: 04.01.1990 DE 4000110; 20.02.1990 DE 4005219; 30.01.1990 DE 9001012 U
(43) Veröffentlichungstag der Anmeldung: 07.08.1991
(73) Patentinhaber: L.B. BOHLE PHARMATECHNIK GmbH, D-59303 Ennigerloh (DE)
(72) Erfinder: Bohle, L. B., W-4722 Ennigerloh (DE)
(74) Vertreter: Habbel, Hans-Georg, Dipl.-Ing.

(56) Entgegenhaltungen:
- EP-A- 0 323 375
- CH-A- 349 477
- DE-A- 1 557 042
- DE-A- 2 525 362
- DE-A- 2 836 241
- DE-A- 3 304 112
- FR-A- 2 273 582
- GB-A- 2 085 742
- US-A- 1 344 565
- US-A- 3 068 981
- US-A- 3 262 680
- US-A- 3 421 741

## Beschreibung

Die Erfindung bezieht sich auf einen Mischgranulator gemäß dem Oberbegriff des Hauptanspruches.

In der gattungsbildenden CH-A-349 477 wird ein Chargenmischer beschrieben, der einen festen Behälter aufweist, in den eine horizontale, mit Mischwerkzeugen versehene Antriebswelle hineinragt, wobei der untere Teil des Behälters gewölbt ausgebildet ist und mit einer Klapptür versehen ist, die mit einer Schließ- und Öffnungsvorrichtung betätigt werden kann, die als Kolbenzylinderanordnung ausgebildet ist. Diese bekannte Kolbenzylinderanordnung besteht aus einem in einem Zylinder pneumatisch verschiebbaren Kolben, an den eine Kolbenstange angreift, die zu einem Hebel führt, der mit der Klapptür des Behälters verbunden ist. Im Bereich des Durchtritts des Kolbens aus dem Zylinder kann Druckmittel oder Schmiermittel austreten, das leicht zu Verunreinigungen des ausfließenden Behälterinhaltes führen kann, insbesondere dann, wenn es sich um pharmazeutische Stoffe handelt, die auf keinen Fall verschmutzt werden dürfen.

Das Rührwerk in diesem bekannten Mischbehälter wird nicht näher beschrieben.

In der DE-A-15 57 042 wird ebenfalls ein Mischbehälter mit gewölbtem Boden und zylindrischen Wandungen beschrieben, der eine vertikal ausgerichtete Antriebswelle für ein Rührwerk aufweist, das mit zwei parallel zur Behältermittelachse ausgerichteten und mit unterschiedlichen Längen ausgebildeten Rührarmen ausgerüstet ist. Das Rührwerk ist in einem Behälter vorgesehen, der mit pulverförmigem Gut gefüllt sein kann. Das Rührwerk rotiert ständig in eine Richtung und soll dadurch ein gutes Durchmischen des Rührwerkes bewirken.

Der Erfindung liegt die Aufgabe zugrunde, ein Rührwerk zu schaffen, bei welchem der Rührflügel so ausgebildet ist, daß er im wesentlichen zwei Funktionen erfüllen kann, nämlich einmal ein gutes Durchmischen des Behälterinhaltes bei seiner Drehbewegung, andererseits soll mit dem Rührflügel aber auch ein vollständiges Entleeren des Mischbehälters möglich sein.

Diese der Erfindung zugrundeliegende Aufgabe wird durch die Lehre des Hauptanspruches gelöst. Vorteilhafte Ausgestaltungen des Rührwerkes sind in den Unteransprüchen 2 bis 7 erläutert.

Mit anderen Worten ausgedrückt wird vorgeschlagen, daß durch die Gestaltung des Rührwerkes einerseits in einer Drehrichtung des Rührwerkes ein gutes Mischen des Mischgutes ermöglicht werden soll, und zwar dadurch, daß das Mischgut an der Aufgleitseite hochgleitet und ein Umwälzen des Mischgutes dadurch erfolgt, daß das Mischgut von der Seitenwand zum Zentrum des Behälters umgewälzt wird. Wird das Rührwerk in der anderen Umlaufrichtung angetrieben, schiebt die sogenannte Schubseite das Gut vor sich her und aufgrund der Neigung der Rührarme gelangt nunmehr das Gut zu einer zentralen Entleerungsöffnung des Mischbehälters und kann hier problemlos ausgetragen werden. Um diese zentral angeordnete Bodenklappe zu betätigen, ist eine Kolbenzylinderanordnung vorgesehen, die gemäß den Unteransprüchen 8 und 9 in besonders vorteilhafter Weise so ausgebildet ist, daß ein sichereres abgedichtetes Arbeiten der Kolbenzylinderanordnung erreicht wird.

In den Unteransprüchen 10 bis 13 wird eine gute Handhabung des Mischbehälters und des Rührwerkes erläutert. Durch diese Ausbildung kann der Mischbehälter in eine tiefste unterste Stellung gefahren werden, in der er problemlos gereinigt werden kann. Durch Anheben des Mischbehälters aus dieser tiefsten Stellung heraus wird die Oberseite des Mischbehälters unter die Unterseite des Hubteiles gelegt und beide Teile können nunmehr zusammen angehoben werden, wobei also das Hubteil für sich allein nicht angetrieben wird, sondern der Antrieb erfolgt über hydraulische Kolbenzylinderanordnungen heb- und senkbar am Mischbehälter. Das Hubteil selbst trägt dabei die erforderlichen Antriebseinrichtungen für die Mischwerkzeuge, die in dem Mischbehälter eingreifen und weiterhin ist das Hubteil mit einer entsprechenden Einfüllöffnung versehen, so daß bei fest angelegtem Mischbehälter die Befüllung des Mischbehälters durch das Hubteil hindurch möglich ist.

Die Gesamtanordnung wird kastenförmig ausgebildet, d. h. es sind vorzugsweise aus Edelstahl bestehende Verkleidungen vorgesehen, so daß die gesamten, angetriebenen Einrichtungen verkleidet sind und damit eine gute Reinigung möglich ist.

Ein Ausführungsbeispiel des neuen Mischgranulators wird nachfolgend anhand der Zeichnungen erläutert. Die Zeichnungen zeigen dabei in
- Fig. 1: in einer Schnittdarstellung den aus Grundteil, Mischbehälter und Hubteil bestehenden Mischgranulator, in
- Fig. 2: eine Draufsicht auf die Anordnung gemäß Fig. 1, in
- Fig. 3: eine Seitenansicht auf die Anordnung gemäß Fig. 1, in
- Fig. 4: die Betätigungseinrichtung für die Bodenklappe, in
- Fig. 5: schaubildlich eine Ansicht auf das Rührwerk, in
- Fig. 6: einen Schnitt gemäß der Linie 6 - 6 in Fig. 8, in
- Fig. 7: einen Schnitt gemäß der Linie 7 - 7 in Fig. 6 und in
- Fig. 8: einen Schnitt gemäß der Linie 8 - 8 in Fig. 6.

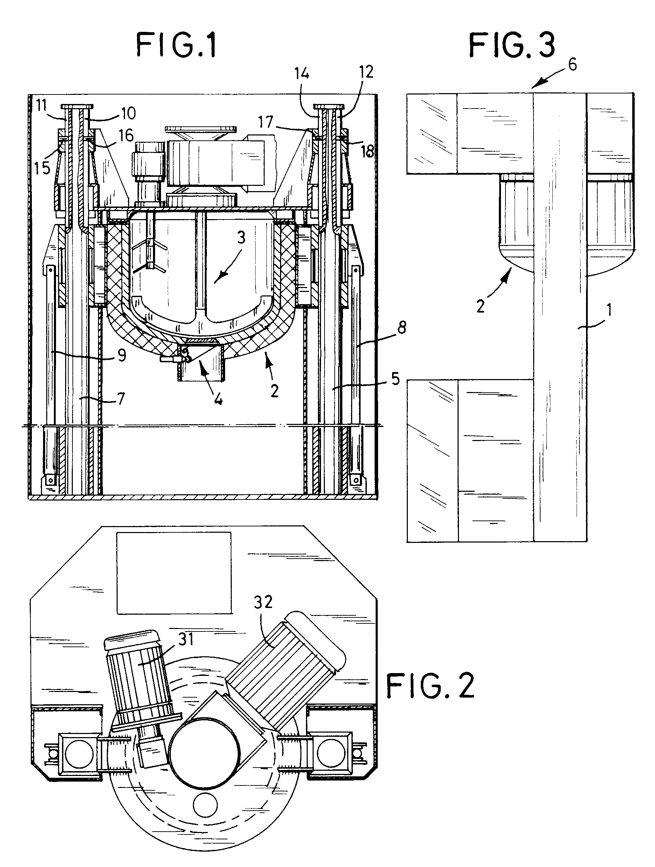

In den Fig. 1 bis 3 ist ein Grundteil 1 gezeichnet, das bei dem dargestellten Ausführungsbeispiel im wesentlichen zwei Führungsstützen 5 und 7 aufweist, an denen sich ein Mischbehälter 2 führt. An dem Grundteil 1 stützen sich hydraulische Kolbenzylinderanordnungen 8 und 9 ab, die anderenendes an dem Mischbehälter 2 angreifen und den Mischbehälter 2 auf- und abbewegen können. In dem Mischbehälter 2 arbeiten drehende Rührwerke 3, die über entsprechende Antriebsmotore 31 und 32 angetrieben werden.

Die Antriebsmotore 31 und 32 sowie die drehenden Rührwerke 3 werden von einem Hubteil 6 getragen, das sich ebenfalls an den Führungsstützen 5 und 7 führt. Hierzu sind in den Führungsstützen 5 und 7 Führungsschlitze 10, 11 bzw. 12, 14 vorgesehen, in die Führungsnocken 15, 16 bzw. 17, 18 eingreifen.

Insbesondere aus der Darstellung in Fig. 1 ist erkennbar, daß durch Absenken des Mischbehälters 2 das Hubteil 6 so lange dem Mischbehälter folgt, bis die Führungsnocken 15, 16 bzw. 17, 18 zur Anlage an den unteren Enden der Führungsschlitze 10, 11 bzw. 12, 14 gelangen. Dann ist eine Trennung zwischen Hubteil 6 und Mischbehälter 2 möglich, beispielsweise um den Mischbehälter 2 zu reinigen.

Die Entleerung des Mischbehälters erfolgt über eine Entleerungsvorrichtung 4, die auch betätigt und wirksam werden kann, wenn der Mischbehälter 2 in seiner oberen Stellung steht.

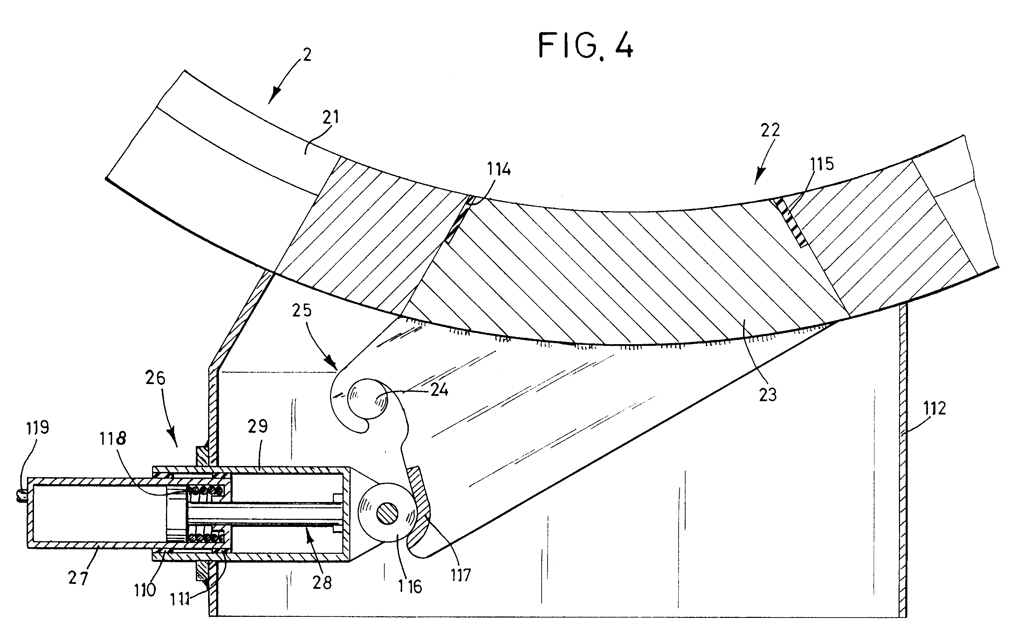

Die Fig. 4 zeigt teilweise in einer Schnittdarstellung den Teil eines Behälters 2, der eine Bodenwandung 21 aufweist, die - wie aus der Zeichnung erkennbar - gewölbt ausgebildet ist. Im Wölbungstiefsten der Bodenwandung 21 ist eine Entleerungsöffnung 22 vorgesehen, die durch eine Bodenklappe 23 verschlossen wird. Diese Bodenklappe 23 greift mittels eines Hakens 25 über einen Drehbolzen 24 und ist somit um diesen Drehbolzen 24 schwenkbar gelagert, aber da der Anschluß an den Drehbolzen 24 über einen Haken 25 erfolgt, kann nach entsprechender Drehung der Bodenklappe 23, wenn diese aus der Entleerungsöffnung 22 vollkommen herausgetreten ist, die Bodenklappe 23 vom Haken abgenommen werden.

Die Betätigung der Bodenklappe 23 erfolgt über eine Kolbenzylinderanordnung 26, die mittels einer Druckrolle 116 an einem entsprechenden, gegenüber dem Drehbolzen 24 exzentrisch gelagerten Drucklager 117 der Bodenklappe 23 angreift. Die Kolbenzylinderanordnung 26 besteht aus dem Hauptzylinder 27 und dem in diesem Zylinder 27 geführten Kolben 28, der gegen die Kraft einer Rückstellfeder 118 durch ein bei 119 zuzuführendes Druckmittel bewegt werden kann. Am vorderen Ende der Kolbenstange des Kolbens 28 greift ein Außenzylinder 29 an, der abdichtend über die Dichtungen 110 und 111 auf der Außenseite des Zylinders 27 geführt ist, so daß dann, wenn aus der Durchtrittsöffnung im Zylinder 27 für die Kolbenstange des Kolbens 28 Druckmittel austritt, dieses nicht in den die Entleerungsöffnung 22 umgebenden Auslauf 112 eintreten kann.

Die Bodenklappe 23 ist innerhalb der Entleerungsöffnung 22 durch Flachdichtungen 114 und 115 abgedichtet.

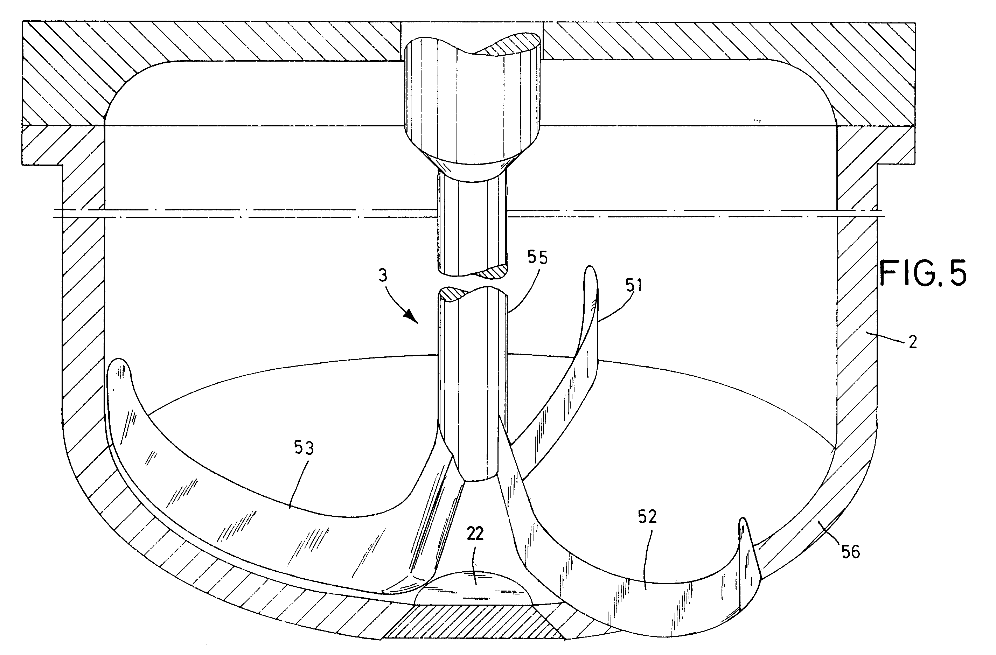

In den Fig. 5 bis 7 ist der Mischbehälter 2 dargestellt, der die Entleerungsöffnung 22 aufweist, die im Zentrum eines gewölbten Bodens 56 angeordnet ist. In diesen Mischbehälter 2 ragt eine Antriebswelle 55 für ein Rührwerk 3, wobei die Antriebswelle 55 an ihrem unteren Ende Rührarme 51, 52 und 53 trägt. Hierbei reicht die Antriebswelle 55 nicht bis unmittelbar über den Boden des Mischbehälters 2, sondern endet im Abstand von der Oberfläche des Bodens 56 und die Rührarme 51, 52 und 53 schließen an das untere Ende der Antriebswelle 55 ebenfalls mit nach oben gerichteten Armteilen an, so daß trotz der Umlaufbewegung des Rührwerkes die Entleerungsöffnung 22 freigehalten wird.

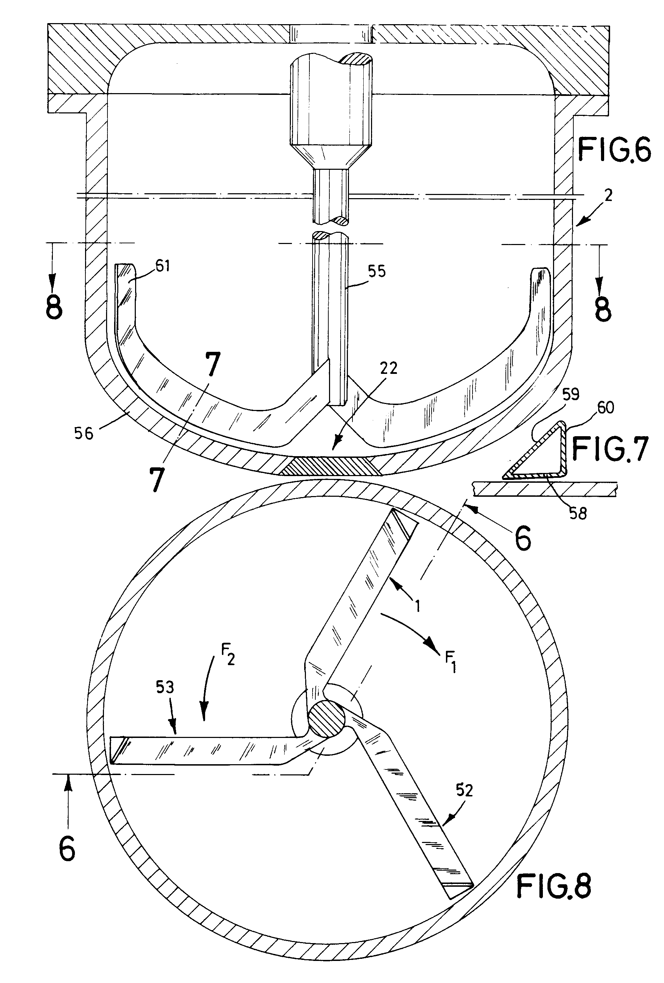

Wie dies besonders deutlich aus Fig. 8 ersichtlich ist, schließen die Rührarme 51, 52 und 53 an die Antriebswelle 55 tangential an, so daß sich bei den Umlaufbewegungen der Rührarme unterschiedliche Winkel ergeben.

Die Rührarme 51, 52 und 53 werden aus Blechprofilen hergestellt, sind also innen hohl und somit wird eine Leichtbaukonstruktion geschaffen, deren Antrieb nicht energieaufwendig ist. Der einzelne Rührarm besteht dabei aus einer Unterseite 58, einer an die Unterseite 58 anschließenden Aufgleitseite 59 und einer die Unterseite 58 und die Aufgleitseite 59 verbindenden Schubseite 60. Fig. 8 macht deutlich, daß dadurch, daß die Rührarme 51, 52 und 53 tangential an die Antriebswelle 55 anschließen, das eigentliche Rührwerk zwei unterschiedliche Funktionen ausüben kann. Wird das Rührwerk gemäß dem Pfeil F₁ in Fig. 8 angetrieben, kommt die Schubseite 60 der Rührarme 51, 52 und 53 zur Wirkung, d. h. diese Schubseite 60 schiebt das Gut vor sich her zum Zentrum des Mischbehälters 2 und damit zur Entleerungsöffnung 22.

Wird das Rührwerk in Richtung des Pfeiles F₂ angetrieben, kommt die Aufgleitseite 59 zur Wirkung und durch diese wird das Mischgut angehoben und über den Rührarm 51 bzw. 52 oder 53 gehoben. Da - wie dies deutlich aus Fig. 6 erkennbar ist - die Rührarme in Anpassung an den gewölbten Boden 56 ebenfalls leicht nach außen hochgerichtet sind, wobei die freien Enden der Rührarme parallel zu den zylindrischen Wandteilen des Mischbehälters 2 verlaufen, erfolgt hierdurch ein zusätzliches Umlenken und Durchmischen des eigentlichen Mischgutes.

## Patentansprüche

1. Mischgranulator mit einem Mischbehälter (2) und einem darin befindlichen, eine Antriebswelle (55) mit Mischwerkzeugen aufweisenden Rührwerk (3), bei dem der Mischbehälter (2) an seiner Bodenseite gewölbt ausgebildet ist und an seiner tiefsten Stelle eine Entleerungsöffnung (22) aufweist, die durch eine nach unten um einen Drehbolzen (24) mittels einer Kolbenzylinderanordnung (26) schwenkbare und aus der Entleerungsöffnung (22) wegklappbare Bodenklappe (23) verschließbar ist, dadurch gekennzeichnet, daß die in beiden Richtungen antreibbare Antriebswelle (55) vertikal ausgerichtet ist und in Anpassung an den gewölbten Boden gewölbt ausgebildete Rührarme (51, 52, 53) aufweist, die im Querschnitt gesehen je eine im wesentlichen ebene Unterseite (58), eine an die eine Randkante der Unterseite (58) anschließende, gegenüber der Lotrechten geneigte Aufgleitseite (59) und eine an die andere Randkante der Unterseite (58) und die obere Kante der Aufgleitseite (59) anschließende, im wesentlichen lotrechte Schubseite (60) aufweisen, (Fig. 7) wobei bei der einen Drehrichtung der Rührarme das Mischgut an der Aufgleitseite (59) hochgeleitet und gemischt wird, während bei der entgegengesetzten Drehrichtung es von der Schubseite (60) zur Entleerungsöffnung geschoben wird.

2. Mischgranulator nach Anspruch 1, dadurch gekennzeichnet, daß drei Rührarme (51, 52, 53) vorgesehen sind.

3. Mischgranulator nach Anspruch 1 oder 2, dadurch gekennzeichnet, daß die Rührarme (51, 52, 53) außermittig, d.h. tangential an die zentrale Antriebswelle (55) anschließen.

4. Mischgranulator nach einem der vorhergehenden Ansprüche, dadurch gekennzeichnet, daß die Rührarme (51, 52, 53) aus dünnwandigen Blechen hergestellt sind.

5. Mischgranulator nach einem der vorhergehenden Ansprüche, dadurch gekennzeichnet, daß die zentrale Antriebswelle (55) im Abstand vom Boden (56) des Mischbehälters (2) endet und die Rührarme (51, 52, 53) ebenfalls im Abstand vom Boden (56) des Mischbehälters (2) an das untere Ende der Antriebswelle (55) anschließen.

6. Mischgranulator nach einem der vorhergehenden Ansprüche, dadurch gekennzeichnet, daß die Unterseite (58) jedes Rührarmes (51, 52, 53) einen Freiwinkel von 1 - 10° mit dem Boden (56) des Mischbehälters (2) einschließt.

7. Mischgranulator nach einem der vorhergehenden Ansprüche, dadurch gekennzeichnet, daß die freien Enden (61) der Rührarme (51, 52, 53) parallel zur zylindrischen Wandung des Mischbehälters (2) hochgezogen sind.

8. Mischgranulator nach einem der vorhergehenden Ansprüche, dadurch gekennzeichnet, daß an dem Kolben (28) der Kolbenzylinderanordnung (26) ein Außenzylinder (29) anschließt, der den Zylinder (27) der Kolbenzylinderanordnung (26) übergreift und abdichtend auf der Außenseite des Zylinders (27) gleitbar gelagert ist.

9. Mischgranulator nach Anspruch 1, dadurch gekennzeichnet, daß die Bodenklappe (23) dadurch abnehmbar ausgebildet ist, daß die Bodenklappe (23) mittels eines Hakens (25) an dem Drehbolzen (24) angreift.

10. Mischgranulator nach einem der vorhergehenden Ansprüche mit einer aus einem vertikal ausgerichteten Grundteil (1) bestehenden Hubvorrichtung für den Mischbehälter (2) und einem in der Höhe gegenüber dem Grundteil verstellbaren Hubteil (6), das die obere offene Seite des Mischbehälters (2) allseitig übergreift und abdichtend an die Oberseite des Mischbehälters (2) anlegbar ist, wobei das Hubteil (6) die Antriebseinrichtungen für das drehende Rührwerk (3) aufweist, gekennzeichnet durch zwei Führungsstützen (5, 7), an denen der Mischbehälter (2) auf- und abbeweglich geführt ist und die oberhalb des Mischbehälters (2) das Hubteil (6) auf und ab führen, wobei der Mischbehälter (2) über Kolbenzylinderanordnungen (8, 9) und das Hubteil (6) nur über den Mischbehälter (2) heb- und senkbar ist.

11. Mischgranulator nach Anspruch 10, dadurch gekennzeichnet, daß das Hubteil (6) nur über einen begrenzten Weg in der Höhe verstellbar an den Führungssstützen (5, 7) gelagert ist.

12. Mischgranulator nach einem der vorhergehenden Ansprüche, gekennzeichnet durch in den Führungsstützen (5, 7) angeordnete, nur über einen Teilbereich ihrer Höhe laufende Führungsschlitze (10, 11; 12, 14) und die diese eingreifende, an dem Hubteil angeordnete Führungsnocken (15, 16; 17, 18).

13. Mischgranulator nach einem der vorhergehenden Ansprüche, dadurch gekennzeichnet, daß das Grundteil (1) und das Hubteil (6) als kastenförmige Hohlkörper ausgebildet sind, wobei in den Hohlkörpern die erforderlichen Antriebseinrichtungen untergebracht sind.

## Claims

1. A mixing granulator comprising a mixing container (2) and an agitator mechanism (3) located therein and comprising a drive shaft (55) with mixing tools, in which the mixing container (2) is of curved construction at its base and comprises an evacuation opening (22) at its lowest point, which evacuation opening (22) may be closed by a bottom flap (23) which is swivellable downwards about a pivot (24) by means of a piston/cylinder arrangement (26) and may be folded away from the evacuation opening (22), characterized in that the drive shaft (55) drivable in both directions is vertically oriented and comprises agitator arms (51, 52, 53) of curved construction in accordance with the curved base, which agitator arms (51, 52, 53), when viewed in cross section, each comprise a substantially even underside (58), a slide side (59) adjoining the edge of the underside (58) and inclined to the vertical, and a substantially vertical thrust side (60) adjoining the other edge of the underside (58) and the upper edge of the slide side (59) (Fig. 7), the mixture being slid up and mixed at the slide side (59) when the agitator arms rotate in one direction, whilst with the opposite direction of rotation it is pushed from the thrust side (60) towards the evacuation opening.

2. A mixing granulator according to claim 1, characterized in that three agitator arms (51, 52, 53) are provided.

3. A mixing granulator according to claim 1 or claim 2, characterized in that the agitator arms (51, 52, 53) adjoin the central drive shaft (55) eccentrically, i.e. tangentially.

4. A mixing granulator according to any one of the preceding claims, characterized in that the agitator arms (51, 52, 53) are made of thin-walled sheets.

5. A mixing granulator according to any one of the preceding claims, characterized in that the central drive shaft (55) ends at a distance from the base (56) of the mixing container (2) and the agitator arms (51, 52, 53) likewise adjoin the lower end of the drive shaft (55) at a distance from the base (56) of the mixing container (2).

6. A mixing granulator according to any one of the preceding claims, characterized in that the under side (58) of each agitator arm (51, 52, 53) forms a clearance angle of from 1 - 10° with the base (56) of the mixing container (2).

7. A mixing granulator according to any one of the preceding claims, characterized in that the free ends (61) of the agitator arms (51, 52, 53) are raised in parallel with the cylindrical wall of the mixing container (2).

8. A mixing granulator according to any one of the preceding claims, characterized in that an outer cylinder (29) adjoins the piston (28) of the piston/cylinder arrangement (26), which outer cylinder (29) overlaps the cylinder (27) of the piston/cylinder arrangement (26) and is mounted slidably and sealingly on the outside of the cylinder (27).

9. A mixing granulator according to claim 1, characterized in that the bottom flap (23) is of removable construction, the bottom flap (23) acting on the pivot (24) by means of a hook (25).

10. A mixing granulator according to any one of the preceding claims, comprising a lifting device consisting of a vertically oriented base part (1) for the mixing container (2) and a lifting member (6) height-adjustable with respect to the base part, which lifting member (6) overlaps the upper, open side of the mixing container (2) on all sides and may be attached sealingly to the top of the mixing container (2), the lifting member (6) comprising the drive apparatuses for the revolving agitator mechanism (3), characterized by two guide supports (5, 7) on which the mixing container (2) is guided so as to be movable up and down and which guide the lifting member (6) up and down above the mixing container (2), it being possible to raise and lower the mixing container (2) via piston/cylinder arrangements (8, 9) and the lifting member (6) via the mixing container (2) only.

11. A mixing granulator according to claim 10, characterized in that the lifting member (6) is mounted on the guide supports (5, 7) so as to be height-adjustable over only a limited path.

12. A mixing granulator according to any one of the preceding claims, characterized by guide slots (10, 11; 12, 14) arranged in the guide supports (5, 7) and running over only a partial area of its height, and by guide dogs (15, 16; 17, 18) engaging therein and arranged on the lifting member.

13. A mixing granulator according to any one of the preceding claims, characterized in that the base part (1) and the lifting member (6) are constructed as box-type hollow members, the necessary drive apparatuses being accommodated in the hollow members.

## Revendications

1. Mélangeur-granulateur comportant une cuve de mélange (2) et à l'intérieur de cette dernière un arbre d'entraînement (55) à mécanisme agitateur (3) muni d'outils de mélange, ladite cuve de mélange (2) étant de forme bombée sur son fond et présentant à son point le plus profond un orifice d'évacuation (22) lequel est obturable par un clapet (23) rabatable vers l'extérieur dudit orifice (22) en pivotant autour d'un pivot (24) sous l'effet d'un mécanisme à piston cylindre (26), caractérisé en ce que l'arbre (55) entraînable dans les deux sens est orienté verticalement et présente des bras agitateurs (51, 52, 53) dont la forme courbe est adaptée au fond bombé de la cuve, lesquels bras présentent chacun un côté inférieur sensiblement plan (58), un côté ascensionnel (59) faisant suite à l'une des arêtes marginales du côté inférieur (58) et incliné par rapport à la verticale, ainsi qu'un côté propulsif (60) sensiblement vertical, faisant suite à l'autre arête marginale du côté inférieur (58) et à l'arête supérieure du côté ascensionnel (59) (figure 7), de sorte que dans l'un des sens de rotation des bras agitateurs le produit à mélanger est dirigé vers le haut le long du côté ascensionnel (59) tout en étant mélangé, tandis que, lors de la rotation en direction inverse, ledit produit est poussé par le côté propulsif (60) vers l'orifice d'évacuation.

2. Mélangeur-granulateur selon la revendication 1, caractérisé par la présence de trois bras agitateurs (51, 52, 53).

3. Mélangeur-granulateur selon la revendication 1 ou 2, caractérisé en ce que les bras agitateurs (51, 52, 53) sont raccordés à l'arbre d'entraînement central (55) de manière excentrée, c'est-à-dire tangentielle.

4. Mélangeur-granulateur selon l'une des revendications précédentes, caractérisé en ce que les bras agitateurs (51, 52, 53) sont fabriqués en tôles minces.

5. Mélangeur-granulateur selon l'une des revendications précédentes, caractérisé en ce que l'arbre d'entraînement central (55) s'achève à une certaine distance du fond (56) de la cuve de mélange (2) et que les bras agitateurs (51, 52, 53) sont également raccordés à l'extrémité inférieure dudit arbre (55) à une certaine distance dudit fond (56) de la cuve de mélange (2).

6. Mélangeur-granulateur selon l'une des revendications précédentes, caractérisé en ce que le côté inférieur (58) de chaque bras agitateur (51, 52, 53) et le fond (56) de la cuve de mélange (2) forment un angle compris entre 1 et 10°.

7. Mélangeur-granulateur selon l'une des revendications précédentes, caractérisé en ce que les extrémités libres (61) des bras agitateurs (51, 52, 53) sont orientées vers le haut, parallèlement à la paroi cylindrique de la cuve de mélange (2).

8. Mélangeur-granulateur selon l'une des revendications précédentes, caractérisé en ce qu'au piston (28) du mécanisme piston-cylindre (26) est raccordé un cylindre extérieur (29) qui entoure le cylindre (27) dudit mécanisme piston cylindre (26), ledit cylindre extérieur (29) étant monté de manière coulissante et étanche sur le côté extérieur du cylindre (27).

9. Mélangeur-granulateur selon la revendication 1, caractérisé en ce que le clapet (23) est réalisé de manière amovible du fait qu'il s'articule sur un pivot (24) au moyen d'un crochet (25).

10. Mélangeur-granulateur selon l'une des revendications précédentes, comportant un dispositif de levage de la cuve de mélange (2), constitué d'une partie de base (1) orientée verticalement et d'une partie levante (6) à niveau réglable par rapport à la partie de base, ladite partie levante (6) entourant de tous côtés le côté supérieur ouvert de la cuve de mélange (2) et pouvant être appliqué de manière étanche contre le côté supérieur de ladite cuve de mélange (2), cette partie levante (6) présentant les dispositifs d'entraînement du mécanisme agitateur rotatif (3), caractérisé par la présence de deux supports de guidage (5, 7) le long desquels la cuve de mélange (2) est conduite en un mouvement ascendant et descendant et qui guident vers le haut et vers le bas la partie levante (6) au-dessus de la cuve de mélange (2), ladite cuve de mélange (2) étant soulevable et abaissable par l'intermédiaire de mécanismes à piston-cylindre (8, 9) et la partie levante (6) n'étant abaissable et soulevable que dans la zone placée au-dessus de la cuve de mélange (2).

11. Mélangeur-granulateur selon la revendication 10, caractérisé en ce que la partie levante (6) s'appuie sur les supports de guidage (5, 7) de manière telle que son niveau n'est réglable que sur un trajet limité.

12. Mélangeur-granulateur selon l'une des revendications précédentes, caractérisé par la présence d'encoches de guidage (10, 11, 12, 14) disposées dans les supports de guidage (5, 7) et ne s'étendant que sur une partie de la hauteur de ces derniers, encoches dans lesquelles pénètrent des ergots de guidage (15, 16, 17, 18) disposés sur la partie levante.

13. Mélangeur-granulateur selon l'une des revendications précédentes, caractérisé en ce que la partie de base (1) et la partie levante (6) sont réalisées sous la forme de corps creux en caissons, les dispositifs d'entraînement nécessaires étant logés dans lesdits corps creux.
